# EUROPÄISCHE PATENTSCHRIFT

(11) **EP 0 382 737 B1**
(45) Veröffentlichungstag und Bekanntmachung des Hinweises auf die Patenterteilung: **10.11.1993**
(21) Anmeldenummer: 88907245.0
(22) Anmeldetag: 26.08.1988
(51) Int. Cl.: G02B 6/42

(54) **OPTISCHES SYSTEM, DAS AUS WENIGSTENS ZWEI TEILSYSTEMEN BESTEHT**
OPTICAL SYSTEM CONSISTING OF AT LEAST TWO SUBSYSTEMS
SYSTEME OPTIQUE CONSTITUE D'AU MOINS DEUX SOUS-SYSTEMES

(30) Priorität: 27.08.1987 DE 3728688
(43) Veröffentlichungstag der Anmeldung: 22.08.1990
(73) Patentinhaber: Optische Werke G. Rodenstock, 80469 München (DE); Hofbauer, Engelbert, D-81539 München (DE)
(72) Erfinder: Hofbauer, Engelbert, D-81539 München (DE)
(86) Internationale Anmeldenummer: DE8800523
(87) Internationale Veröffentlichungsnummer: WO8902090

(56) Entgegenhaltungen:
- DE-A- 286 474
- DE-A- 3 300 902
- DE-A- 3 433 717
- GB-A- 2 081 963
- US-A- 4 616 899
- Karl Mütze et al.: "ABC der Optik" 1961, VEB Edition Leipzig, DE; Seite 26.

## Beschreibung

Die Erfindung betrifft ein optisches System bestehend aus wenigstens zwei relativ zueinander justierten Teilsystemen und aus einem Zylindersymmetrischen Justierelement mit wenigstens zwei Gleitflächen, wobei jedes Teilsystem wenigstens eine Gleitfläche aufweist, über die es an einer Gleitfläche des Justierelementes anliegt, und das mit den Teilsystemen verklebte Justierelement so zwischen diesen angeordnet ist, daß die optische Achse eines Teilsystems das Justierelement im wesentlichen parallel zur Symmetrieachse durchsetzt, wobei das Justierlement wenigstens im Bereich der optischen Achse für elektromagmetische Strahlung durchlässig ist.

Durch die DE-OS 34 33 717 ist ein Verfahren zum Koppeln optischer Bauelemente bekannt. Dabei werden zwei Teilsysteme mit einer Justiervorrichtung durch eine metallische Gefügeverbindung wie Schweißen oder Löten verbunden. Hierdurch wird in das optische System eine relativ große Wärmemenge eingebracht. Wegen des Wärmeeintrags und der Materialverflüssigung kann es zu unerwünschten Depositionierungen kommen. Die Verbindungsstellen zwischen den Teilsystemen und dem Justierelement sind daher möglichst weit entfernt von den optischen Bauelementen anzuordnen, so daß eine kompakte Bauweise nicht möglich ist. Eine Rotation um die optische Achse ist nach der Befestigung der optischen Bauelemente auf den Trägerkörpern nicht möglich. Es ist aufwendig, die beim bekannten Verfahren erforderlichen Beschichtungen aufzubringen. Außerdem sind für die Einhaltung der angegebenen Toleranzen hochgenau gefertigte Justierelemente und Trägerkörper erforderlich.

Aufgrund der nicht zylindersymmetrischen Bauweise ist die Stabilität gegenüber Temperatureinflüssen und mechanischen Schwingungen und dergleichen nicht vergleichbar mit der Stabilität zylindersymmetrischer Halterungen für optische Bauteile.

Weiterhin sind aus nur zwei Teilsystemen bestehende optische Systeme bekannt. Sie werden justiert, indem das eine, z.B. aus einem Linsensystem mit Fassung bestehende Teilsystem relativ zum weiteren Teilsystem in verschiedene Justierrichtungen bewegt wird, bis die beiden Teilsysteme eine optimale Position eingenommen haben. In dieser Position werden die beiden Teilsysteme stoffschlüssig miteinander verbunden. Bevorzugt wird zur stoffschlüssigen Verbindung ein Klebesystem verwendet, da dem optischen System beim Löten oder Schweißen relativ große Wärmemengen zugefügt werden, die unerwünschte Depositionierungen innerhalb des optischen Systems bewirken können. Bei einer Klebeverbindung wird zwar ein Wärmeeintrag vermieden, jedoch schrumpfen Klebestoffe beim Abbinden. Um eine Dejustierung des optischen Systems durch Schrumpfung des Klebers möglichst klein zu halten, werden Klebstoffe verwendet, die beim Abbinden nur minimal schrumpfen, beispielsweise um 1 % bis 2 %. Derartige Klebstoffe haben jedoch den Nachteil, daß das Abbinden relativ lange dauert.

Bei bestimmten optischen Systemen kann selbst mit Klebstoffen, die nur geringfügig schrumpfen, nicht die erforderliche Justiergenauigkeit erzielt werden:
Dies ist beispielsweise bei einem optischen System, das eine Laserdiode und ein kollimierendes Linsensystem enthält, der Fall. Die Laserdiode und das kollimierende Linsensystem können in separaten Fassungen aufgenommen sein. In vielen Anwendungsfällen ist es nun erforderlich, diese beiden Teilsysteme bezüglich dreier Richtungen mit jeweils einer Genauigkeit von weniger als 1µm zu positionieren. Dazu werden die beiden aus Laserdiode mit Fassung bzw. Linsensystem mit Fassung bestehenden Teilsysteme zunächst durch Relativbewegung beider Fassungen justiert und anschließend verklebt. Nach dem Justiervorgang sind die Klebespalten zwischen den Fassungen jedoch ungleichmäßig und groß. Selbst bei Verwendung eines Klebstoffes, der nur minimal schrumpft, führt der Schrumpfprozeß des Klebstoffes zu einer Dejustierung des optischen Systems. Aufgrund der Schrumpfung können die erforderlichen Genauigkeitsgrenzen daher nicht eingehalten werden.

Durch die GB-A-2 o81 963 ist eine Laserhalbleitervorrichtung mit einer asphärischen Einzellinse zum Kollimieren der Laserlichtstrahlen bekannt. Dabei wird die Linse in ein Gehäuse eingesetzt und mit diesem verklebt. Das Laserhalbleiterelement ist über einen Halter an einer Grundplatte befestigt, die ebenfalls mit dem Gehäuse verklebt ist.

Durch die DE-A1- 33 oo 9o2 ist weiterhin ein Halbleiterlaser mit Kollimierungslinse bekannt. Die Linse ist in eine Gehäusekappe eingesetzt, die auf einen Positionierring aufgesetzt ist. Das Halbleiterelement ist über einen Kühlkörper mit einem Gehäuseboden verbunden. Gehäusekappe und Gehäuseboden werden mit dem Positionierring verschweißt.

Der Erfindung liegt die Aufgabe zugrunde, ein optisches System der eingangs genannten Art anzugeben, das eine möglichst kompakte, stabile Bauweise ermöglicht und bei dem aufgrund seiner Gestaltung eine hohe Justiergenauigkeit auch nach der Fixierung der beiden Teilsysteme durch stoffschlüssige Verbindung gewährleistet ist.

Diese Aufgabe wird erfindungsgemäß dadurch gelöst, daß das Justierelement die Form eines Zylinders hat, daß eines der Teilsysteme wenigstens drei voneinander beabstandete Arme mit je einer Gleitfläche aufweist, über die jeder Arm an einer zugeordneten Gleitfläche in der Mantelfläche des Justierelements an diesem anliegt und in deren Bereich jeder Arm mit dem Justierelement derart verklebt ist, daß die Klebestellen entlang des Zylinderumfangs gleichmäßig verteilt sind.

Erfindungsgemäß werden die Teilsysteme mit dem Justierelement verklebt. Dadurch werden Depositionierungen, die auf Wärmeeintrag und Materialverflüssigung zurückzuführen sind, vermieden. Der beim Abbinden von Klebern auftretende Schrumpf hat keine oder nur eine unbedeutende Auswirkung auf die Justiergenauigkeit. Dies ist u.a. darauf zurückzuführen, daß die Klebestellen zwischen dem an der Mantelfläche des Justierelementes anliegenden Teilsystem und dem Justierelement gleichmäßig verteilt sind. Durch die gleichmäßige Verteilung der Klebestellen kompensieren sich auftretende Kräfte. Gleichmäßige Verteilung der Klebestellen bedeutet beispielsweise bei einem kreiszylindrischen Justierelement, daß die Klebestellen entlang des Kreisumfangs mit gleichem Abstand zueinander angeordnet sind. Bei einer geraden Zahl an Klebestellen bedeutet dies, daß sich je zwei Klebestellen bezüglich der Zylinderachse diametral gegenüber liegen. Grundsätzlich ist auch eine Klebestelle, die sich z.B. entlang des gesamten Zylinderumfangs erstreckt, denkbar. Aufgrund der Anordnung und der Form des Justierelementes ist eine kompakte, stabile, d.h. zylindersymmetrische Bauweise möglich. Weiterhin ist eine Rotation eines Teilsystems gegenüber dem anderen Teilsystem um die optische Achse möglich.

Dadurch sind die Voraussetzungen geschaffen, Abbildungsfehler, beispielsweise Astigmatismus, korrigieren zu können.

Bei dem vorgeschlagenen optischen System ist es möglich, die beiden Teilsysteme im Bereich der stoffschlüssigen Verbindung spaltfrei am Justierelement anzulegen. Spaltfrei bedeutet, daß wenigstens der eine Verbindung bewirkende Klebstoff in ausreichender Menge zwischen die jeweiligen Gleitflächen einbringbar ist.

Die Bereiche jedes Teilsystems sowie des Justierelements, in denen diese aneinander anliegen, sind als Gleitflächen ausgebildet. Diese Justierstellen sind für die jeweiligen Justierrichtungen derart gestaltet, daß durch Gleitbewegung der jeweiligen Gleitflächen aufeinander das entsprechende Maß für die jeweilige Richtung einstellbar ist. Die beiden Teilsysteme des vorgeschlagenen optischen Systems liegen nicht direkt aneinander an und besitzen keine Verbindungsstelle. Je nach Gestaltung der aneinander anliegenden Gleitflächen kann ein Teilsystem gegenüber dem Justierelement verkippt, gedreht oder verschoben werden.

Grundsätzlich kann das Justierelement selbst mehrteilig ausgebildet sein, wobei die einzelnen Teile ebenfalls an Gleitflächen relativ zueinander bewegbar sein können.

In der Regel handelt es sich bei dem Justierelement jedoch um einen starren Körper.

Da die Gleitflächen eine einander zugeordnete Form besitzen, bleibt die Spaltfreiheit zwischen den Gleitflächen auch nach Ausführung von Justierbewegungen erhalten. Aufgrund der Spaltfreiheit hat eine Volumenänderung des die stoffschlüssige Verbindung bewirkenden Materials praktisch keine Dejustierung zur Folge. Beim vorgeschlagenen System ist somit auch nach der Fixierung der beiden Teilsysteme gegenüber dem Justierelement eine sehr hohe Justiergenauigkeit gewährleistet.

Überraschenderweise hat sich gezeigt, daß beim Fixieren durch Kleben sogar ein Klebesystem verwendet werden kann, das beim Abbinden nicht minimal, sondern durchschnittlich, d.h. um ca. 1o %, der sogar erheblich, d.h. um z.B. 14 % schrumpft, wobei die erforderliche Justiergenauigkeit dennoch eingehalten wird. Somit können Klebesysteme mit sehr kurzer Abbindezeit verwendet werden. Dies ist von großer wirtschaftlicher Bedeutung: Die Teilsysteme werden z.B. mittels Manipulatoren justiert. Die Teilsysteme müssen in diesen Manipulatoren solange gehalten werden, bis nach der Justierung eine feste Verbindung der Teilsysteme mit dem Justierelement stattgefunden hat. Eine kurze Abbindezeit bedeutet daher einen entsprechend geringeren Aufwand an Manipulatoren.

Es hat sich gezeigt, daß für die Gleitflächen keine qualitativ hochwertigen Oberflächen vorzusehen sind, vielmehr reicht die durch Drehen oder optisches Schleifen erzielbare Oberflächenqualität aus.

In einer vorteilhaften Ausgestaltung der Erfindung ist das Justierelement als Abatscher Keil ausgebildet, wobei ein Teilsystem am plankonvexen Teil und das andere Teilsystem am plankonkaven Teil des Abatschen Keils anliegt.

Ist das Justierelement als Abatscher Keil ausgebildet, so können die beiden Teilsysteme zusätzlich gegeneinander verkippt werden.

In bevorzugten Ausgestaltungen der Erfindung ist das Justierelement ein gerader Kreiszylinder oder ein Hohlzylinder. Ist das Justierelement ein Hohlzylinder, so kann eines der Teilsysteme entweder an der äußeren Mantelfläche oder an der inneren Mantelfläche des Hohlzylinders anliegen.

Hierbei hat es sich als besonders vorteilhaft erwiesen, wenn die Gleitfläche in der Grundfläche des Zylinders sowie die dieser Gleitfläche zugeordnete Gleitfläche des Teilsystems kreisringförmig sind. In dieser Ausgestaltung liegt eine rotationssymmetrische Anordnung vor, d.h. die beiden Teilsysteme können gegeneinander verdreht werden. Diese Bewegungsmöglichkeit gestattet es beispielsweise, Astigmatismuskorrekturen mittels einer Zylinderlinse durchzuführen.

Eines der Teilsysteme weist wenigstens drei voneinander beabstandete Arme mit je einer Gleitfläche auf, über die jeder Arm an einer zugeordneten Gleitfläche in der Randfläche des Justierelements an diesem anliegt. Insbesondere bei einem kreisscheibenförmigen Justierelement können die Arme an einem zylindrischen Umfangsrand eines Teilsystems angeordnet sein. Weisen die Arme einen Winkelabstand von ca. 12o° auf, so kann mit drei Armen ein sicherer Halt des Teilsystems am Justierelement erzielt werden.

Es hat sich gezeigt, daß aufgrund einer Selbstzentrierung durch das die stoffschlüssige Verbindung bewirkende Material der Radius der Gleitflächen in den Armen und der Radius der zugeordneten Gleitflächen des Justierelements nicht gleich groß sein müssen, um die erforderliche Justiergenauigkeit zu erreichen. Somit können das Teilsystem und das Justierelement mit den üblichen Fertigungstoleranzen hergestellt werden.

Handelt es sich um ein optisches System mit einer optischen Achse, die das Justierelement durchsetzt, so ist das Justierelement in einer Ausgestaltung der Erfindung wenigstens in einem die optische Achse umgebenden Bereich für elektromagnetische Str ahlung durchlässig.

In einer anderen Ausgestaltung der Erfindung hat es sich als besonders günstig erwiesen, wenn das Justierelement aus einem für elektromagnetische Strahlung, insbesondere für UV-Licht durchlässigen Material besteht und an den Teilsystemen bzw. dem Justierlement Klebestellen für ein Klebesystem, das durch elektromagnetische Strahlung bzw. UV-Licht aushärtbar ist, vorgesehen sind.

Durch die Verwendung von Klebesystemen, die durch UV-Licht aushärtbar sind, kann die Abbindezeit enorm kurz gehalten werden. Da das Justierelement aus UV-durchlässigem Material besteht, können die Klebestellen über das Justierelement auf einfache Weise mit UV-Licht bestrahlt und der Klebstoff ausgehärtet werden. Besonders einfach können die Klebestellen mit UV-Licht bestrahlt werden, wenn eines der Teilsysteme über drei oder mehrere Arme am Justierelement anliegt.

Eine weitere bevorzugte Ausgestaltung der Erfindung ist in Unteranspruch 8 angegeben. Es handelt sich hierbei nicht nur um Materialien, die für UV-Licht durchlässig sind, sondern auch um elektrische Isolatoren. Dies ist z.B. bei optoelektronischen Systemen, wie dem in Unteranspruch 9 beanspruchten System aus einer Laserdiode mit einem kollimierenden Linsensystem von Vorteil, da in diesem Fall das Justierelement auch zur notwendigen Isolation zwischen Laserdiodenfassung und der Fassung des Linsensystems dient. Grundsätzlich lässt sich das erfindungsgemäße Prinzip nicht nur auf optische Systeme anwenden, sondern auch auf beliebige andere Bauteile, die zueinander exakt zu justieren und zu fixieren sind.

Im folgenden werden anhand schematischer Skizzen Ausführungsbeispiele der Erfindung erläutert:
Es zeigen:
- Fig. 1: ein optisches System mit einem kreiszylindrischen Justierelement,
- Fig. 2: ein optisches System mit einem als Abatscher Keil ausgebildeten Justierelement
In den Figuren sind übereinstimmende Bauteile mit den gleichen Bezugszeichen versehen.

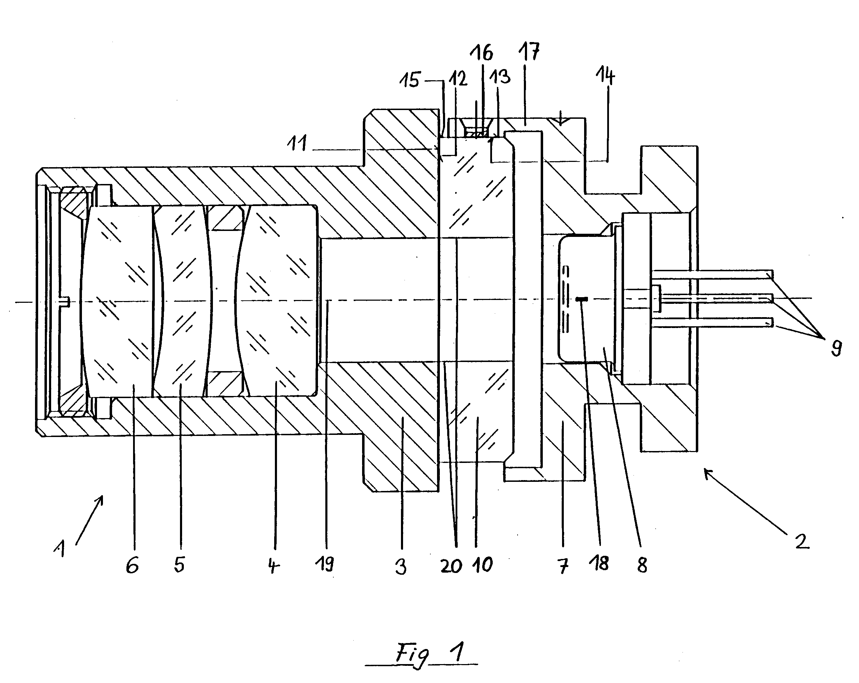

In der Figur 1 ist ein aus zwei Teilsystemen 1,2 bestehendes optisches System im Schnitt dargestellt. Teilsystem 1 besteht im wesentlichen aus drei Linsen 4,5,6, die von einer Fassung 3 aufgenommen sind. Teilsystem 2 besteht im wesentlichen aus einer Laserdiode 8, die in einer Fassung 7 aufgenommen ist. Mit Bezugszeichen 9 sind Versorgungsleitungen, mit Bezugszeichen 18 das Laserelement bezeichnet. Bei der Diode kann es sich um eine Sende- oder Empfangsdiode handeln. Das aus den Linsen 4,5,6 bestehende Linsensystem ist eine kollimierende Optik. Die aktive Fläche der Diode 8 ist in den Brennpunkt der kollimierenden Optik zu justieren. Vorzugsweise soll der Brennpunkt der kollimierenden Optik zur aktiven Fläche der Diode genauer als 1 µm in mindestens drei Richtungen (Freiheitsgraden) justiert werden. Dazu dient ein Justierelement 10, das zwischen den Teilsystemen angeordnet ist. Das Justierelement ist ein kreisscheibenförmiger starrer Körper, der z.B. aus Glas gefertigt ist. Ein Teilbereich der dem Teilsystem 1 zugewandten, zur Kreisscheibenebene parallelen Oberfläche ist als Gleitfläche 12 ausgebildet. Diese Gleitfläche 12 hat Kreisringform. Die Umfangsrandfläche des Justierelementes 1o ist senkrecht zur Kreisscheibenebene orientiert. Teilbereiche dieser Randfläche sind ebenfalls als Gleitfläche 14 ausgebildet.

Die Fassung 3 des Teilsystems 1 besitzt eine zur Kreisscheibenebene des Justierelementes 1o parallele Oberfläche.

In dieser Oberfläche ist ein Teilbereich als Gleitfläche 11 ausgebildet. Bezüglich der mit Bezugszeichen 19 bezeichneten optischen Achse des Linsensystems 4,5,6 besitzt die Gleitfläche 11 Kreisringform. Teilsystem 1 liegt über seine Gleitfläche 11 an der Gleitfläche 12 des Justierelements 10 an. Die Gleitflächen 11,12 besitzen eine einander zugeordnete Form, d.h. sie sind zueinander parallel und haben die Form eines Kreisringes mit etwa gleichem äußeren und gleichem inneren Durchmesser.

Teilsystem 2 besitzt an seinem zylindrischen Umfangsrand drei Arme 17, die einen Winkelabstand von etwa 120° aufweisen. Jeder Arm 17 besitzt eine Gleitfläche 13, über die der Arm an der zugeordneten Gleitfläche 14 in der Umfangsrandfläche des kreisscheibenförmigen Justierelements anliegt. Die Gleitflächen 13 und 14 besitzen eine einander zugeordnete Form, d.h. sie besitzen in einem zur Zeichenebene senkrechten Schnitt Kreisbogenform. Die Radien der beiden Kreisbögen sind aufeinander abgestimmt, d.h. in etwa gleich groß.

Dieses optische System ermöglicht nun folgende Justierbewegungen:
Teilsystem 1 kann relativ zum Justierelement in einer zur Zeichenebene senkrechten Ebene verschoben werden. Außerdem kann das Teilsystem 1 gegenüber dem Justierelement 1o um die optische Achse 19 gedreht werden.

Aufgrund der Gleitfläche 14 des Justierelementes und der Gleitflächen 13 des Teilsystems 2 kann Teilsystem 2 gegenüber dem Justierelement 1o in einer zur Kreisscheibenebene senkrechten Richtung bewegt werden.

Insgesamt können somit Teilsystem 1 und Teilsystem 2 relativ zueinander in drei zueinander senkrechten Richtungen bewegt werden, d.h. die aktive Fläche der Laserdiode 8 kann optimal in den Brennpunkt der kollimierenden Optik justiert werden. In der justierten Position werden die beiden Teilsysteme 1,2 gegenüber dem Justierelement 10 fixiert. Dazu sind mehrere Klebestellen 15,16 vorgesehen. Grundsätzlich kann jeder beliebige Klebstoff verwendet werden.

Bevorzugt findet jedoch ein Klebstoff Anwendung, der durch UV-Licht aushärtbar ist. Nach dem Aufbringen des UV-Klebstoffes wird UV-Licht über das aus Glas bestehende Justierelement auf die Klebestellen gerichtet und der Klebstoff ausgehärtet. Die Gleitflächen 11 und 12 liegen im Bereich der Mikrorauhigkeit aneinander an, so daß aufgrund der beim Abbinden erfolgenden Schrumpfung des Klebers keine unerwünschte Dejustierung in Richtung senkrecht zur Zylindergrundfläche bewirkt wird, sondern auch nach der Justierung der beiden Teilsysteme eine hohe Justiergenauigkeit gewährleistet bleibt.

Die Gleitflächen 13 und 14 müssen nicht unbedingt aneinander anliegen, um eine Dejustierung auszuschließen, da aufgrund der konstruktiven Gestaltung eine Selbstzentrierung des Justierelementes 1o gegenüber dem Teilsystem 2 bewirkt wird. Wegen der Selbstzentrierung sind eventuell vorhandene Abstände zwischen einander zugeordneten Gleitflächen gleich groß.

Zusätzlich bewirkt die Anordnung der Klebestellen bei nicht aneinander anliegenden und eventuell unterschiedlich beabstandeten Gleitflächen eine Kompensierung der Kräfte, die auf den Schrumpf des Klebers zurückzuführen sind. Daher ist auch in den zur Zylindergrundfläche parallelen Richtungen auch nach der Fixierung der beiden Teilsysteme eine hohe Justiergenauigkeit gewährleistet.
Im Justierelement 1o ist eine im Querschnitt kreisförmige Öffnung (Begrenzungsfläche 2o) vorgesehen.

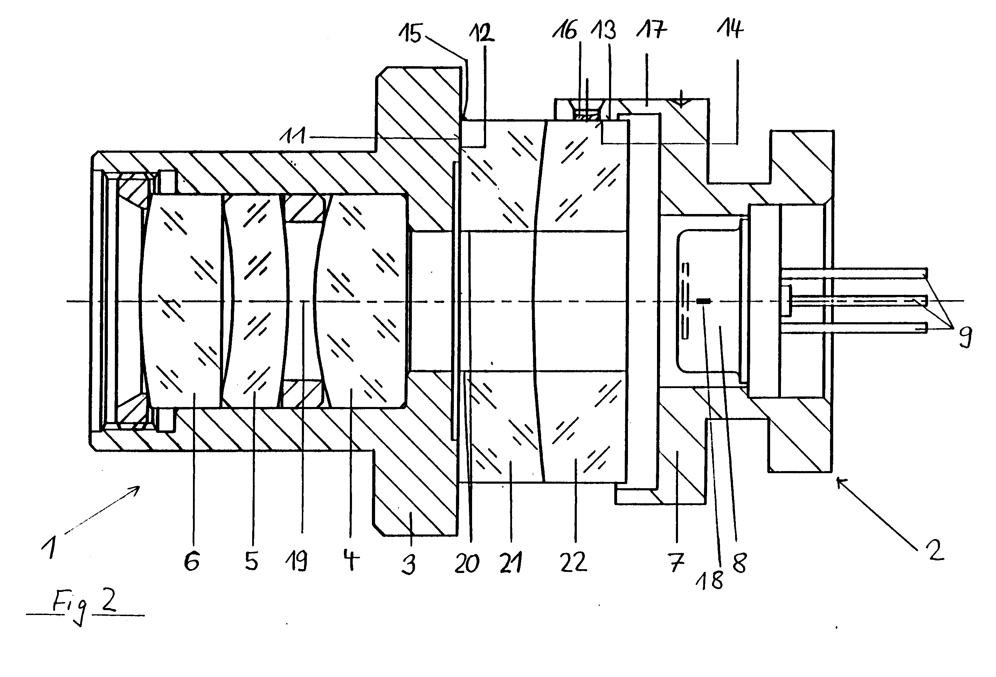

Fig. 2 zeigt ein als Abatscher Keil ausgebildetes Justierelement 1o. Am plankonkaven Teil 21 des Abatschen Keils ist Teilsystem 1, am plankonvexen Teil 22 des Abatschen Keils ist Teilsystem 2 befestigt. Aufgrund der Verkippbarkeit ist es beispielsweise möglich, eine unsymmetrische Abstrahlcharakteristik einer Laserdiode zu korrigieren.

## Patentansprüche

1. Ein optisches System bestehend aus wenigstens zwei relativ zueinander justierten Teilsystemen und aus einem zylindersymmetrischen Justierelement mit wenigstens zwei Gleitflächen, wobei jedes Teilsystem wenigstens eine Gleitfläche aufweist, über die es an einer Gleitfläche des Justierelements anliegt, und das mit den Teilsystemen verklebte Justierelement so zwischen diesen angeordnet ist, daß die optische Achse eines Teilsystems das Justierelement im wesentlichen parallel zur Symmetrieachse durchsetzt, wobei das Justierelement wenigstens im Bereich der optischen Achse für elektromagnetische Strahlung durchlässig ist, dadurch gekennzeichnet, daß das Justierelement (1o) die Form eines Zylinders hat, daß eines der Teilsysteme (2) wenigstens drei voneinander beabstandete Arme (17) mit je einer Gleitfläche (13) aufweist, über die jeder Arm (17) in einer zugeordneten Gleitfläche (14) in der Mantelfläche des Justierelements (2) an diesem anliegt, und in deren Bereich jeder Arm (17) mit dem Justierelement (1o) derart verklebt ist, daß die Klebestellen entlang des Zylinderumfangs gleichmäßig verteilt sind.

2. Optisches System nach Anspruch 1, dadurch gekennzeichnet, daß das Justierelement (1o) ein gerader Kreiszylinder ist.

3. Optisches System nach Anspruch 1 oder 2, dadurch gekennzeichnet, daß das Justierelement (1o) ein Hohlzylinder ist.

4. Optisches System nach einem der Ansprüche 1 bis 3, dadurch gekennzeichnet, daß die Gleitfläche (12) in der Zylindergrundfläche sowie die dieser Gleitfläche zugeordnete Gleitfläche (11) des einen Teilsystems (1) kreisringförmig sind.

5. Optisches System nach einem der Ansprüche 1 bis 4, dadurch gekennzeichnet, daß das Justierelement (1o) als Abatscher Keil ausgebildet ist, wobei ein Teilsystem am plankonvexen Teil und das andere Teilsystem am plankonkaven Teil des Abatschen Keils anliegt.

6. Optisches System nach einem der Ansprüch 1-5, dadurch gekennzeichnet, daß das Justierelement (2) aus einem für elektromagnetische Strahlung, insbesondere für UV-Licht durchlässigen Material besteht und an den Teilsystemen bzw. dem Justierelement Klebestellen (15, 16) für ein Klebesystem, das durch elektromagnetische Strahlung, insbesondere UV-Licht aushärtbar ist, vorgesehen sind.

7. Optisches System nach Anspruch 6, dadurch gekennzeichnet, daß das Justierelement aus UV-durchlässigem Glas oder UV-durchlässiger Keramik besteht.

8. Optisches System nach einem der Ansprüche 1-7, dadurch gekennzeichnet, daß eines der Teilsysteme (2) im wesentlichen aus einer Diode (8) mit Fassung (7) und das andere Teilsystem (1) im wesentlichen aus einem optischen System (4,5,6), insbesondere einem kollimierenden optischen System, mit Fassung (3) besteht.

9. Optisches System nach einem der Ansprüche 1-8, dadurch gekennzeichnet, daß das Justierelement aus elektrisch isolierendem Material besteht.

## Claims

1. An optical system consisting of at least two sub-systems adjustable relative to each other and a cylindrically symmetrical adjusting element with at least two sliding surfaces, with each sub-system possessing at least one sliding surface, through which it abuts the adjusting element at one sliding surface, and the adjusting element cemented to the sub-systems is positioned between these in such a way that the optical axis of one partial system passes through the adjusting element essentially parallel to the axis of symmetry with the adjusting element allowing transmission of electromagnetic radiation at least in the area of the optical axis, characterised by the fact that the adjusting element (10) has the form of a cylinder , that one of the sub-systems (2) has at least three arms (17) positioned at a distance to each other with one sliding surface (13) each through which each arm (17) abuts the adjusting element (2) at a corresponding sliding surface (14) in the peripheral surface of the adjusting element (2), and in whose area each arm (17) is glued to the adjusting element (10) in such a way that the glue spots are distributed equally around the circumference of the cylinder.

2. Optical system according to claim 1, characterised by the fact that the adjusting element (10) is a right circular cylinder.

3. Optical system according to claim 1 or 2, characterised by the fact that the adjusting element (10) is a hollow cylinder.

4. Optical system according to any of the claims 1 to 3, characterised by the fact that the sliding surface (12) in the cylinder base surface and the sliding surface (11) matched to this sliding surface of the one sub- system (1) are circular in form.

5. Optical system according to any of the claims 1 to 4, characterised by the fact that the adjusting element (10) is designed as an Abatsch wedge where one sub-system abuts the plano-convex part and the other sub-system abuts the plano-concave part of the Abatsch wedge.

6. Optical system according to any of the claims 1 to 5, characterised by the fact that the adjusting element (2) consists of a material which transmits electromagnetic radiation, particularly UV light, and that adhesive spots (15, 16) are provided on the sub-elements and/or the adjusting element for an adhesive system which can be hardened by electromagnetic radiation, in particular by UV light.

7. Optical system according to claim 6, characterised by the fact that the adjusting element consists of UV transmitting glass or UV transmitting ceramic.

8. Optical system according to any of the claims 1 to 7, characterised by the fact that one of the sub-systems (2) consists essentially of a diode (8) with mount (7) and the other sub-system (1) essentially of an optical system (4, 5, 6), particularly of a collimating optical system, with mount (3).

9. Optical system according to any of the claims 1 to 8, characterised by the fact that the adjusting element consists of an electrically insulating material.

## Revendications

1. Système optique constitué d'au moins deux sous-systèmes réglés l'un par rapport à l'autre, et d'un élément de réglage à symétrie cylindrique muni d'au moins deux surfaces de glissement, chaque sous - système présentant au moins une surface de glissement par l'intermédiaire de laquelle il est appliqué contre une surface de glissement de l'élément de réglage, et l'élément de réglage collé avec les sous-systèmes étant disposé, entre ces derniers, de telle sorte que l'axe optique d'un sous-système traverse l'élément de réglage pour l'essentiel parallèlement à l'axe de symétrie, l'élément de réglage étant perméable au rayonnement électromagnétique, au moins dans la région de l'axe optique, caractérisé par le fait que l'élément de réglage (10) revêt la forme d'un cylindre ; et par le fait que l'un (2) des sous-systèmes comporte au moins trois bras (17) distants les uns des autres, présentant chacun une surface de glissement (13) par l' intermédiaire de laquelle chaque bras (17) est appliqué contre l'élément de réglage (10) dans une surface de glissement (14) associée, ménagée dans la surface de l'enveloppe dudit élément, surface de glissement dans la région de laquelle chaque bras (17) est collé avec l'élément de réglage (10) de façon telle que les zones de collage soient uniformément réparties le long de la périphérie du cylindre.

2. Système optique selon la revendication 1, caractérisé par le fait que l'élément de réglage (10) est un cylindre droit.

3. Système optique selon la revendication 1 ou 2, caractérisé par le fait que l'élément de réglage (10) est un cylindre creux.

4. Système optique sel on l'une des revendications 1 à 3, caractérisé par le fait que la surface de glissement (12) dans la surface de base du cylindre, ainsi que la surface de glissement (11) de l'un (1) des sous-systèmes, qui est associée à cette surface de glissement, sont en forme d'anneaux circulaires.

5. Système optique selon l'une des revendications 1 à 4, caractérisé par le fait que l'élément de réglage (10) est réalisé sous la forme d'un coin abatique, un sous-système étant appliqué contre la partie plan-convexe, et l'autre sous-système étant appliqué contre la partie plan-concave du coin abatique.

6. Système optique selon l'une des revendications 1-5, caractérisé par le fait que l'élément de réglage (10) consiste en un matériau perméable au rayonnement électromagnétique, notamment à la lumière UV, et des zones de collage (15, 16) sont respectivement prévues, sur les sous-systèmes ou sur l'élément de réglage, pour un système collé durcissable par rayonnement électromagnétique, notamment par lumière UV.

7. Système optique selon la revendication 6, caractérisé par le fait que l'élément de réglage consiste en du verre perméable aux UV ou en de la céramique perméable aux UV.

8. Système optique selon l'une des revendications 1-7, caractérisé par le fait que l'un (2) des sous-systèmes consiste pour l'essentiel en une diode (8) à monture (7), et l'autre sous-système (1) consiste pour l'essentiel en un système optique (4, 5, 6), notamment en un système optique à collimation, pourvu d'une monture (3).

9. Système optique selon l'une des revendications 1-8, caractérisé par le fait que l'élément de réglage consiste en un matériau électriquement isolant.
